# EUROPÄISCHE PATENTSCHRIFT

(11) **EP 4 152 538 B1**
(45) Veröffentlichungstag und Bekanntmachung des Hinweises auf die Patenterteilung: **15.07.2026**
(21) Anmeldenummer: 21306305.0
(22) Anmeldetag: 21.09.2021
(51) Int. Cl.: H02G 15/105, H02G 1/14, H02G 15/115, H02G 15/113, H02G 15/16

(54) **HOCHSPANNUNGSLEITUNGSVERTEILER**
HIGH VOLTAGE LINE DISTRIBUTER
DISTRIBUTEUR DE PUISSANCE HAUTE TENSION

(43) Veröffentlichungstag der Anmeldung: 22.03.2023
(73) Patentinhaber: Nexans, 92400 Courbevoie (FR)
(72) Erfinder: KROOP, Tobias, 92685 FLOSS (DE); FRANK, Christoph, 92685 FLOSS (DE); SCHNEIDER, Thomas, 92685 FLOSS (DE)
(74) Vertreter: Ipsilon

(56) Entgegenhaltungen:
- EP-B1- 0 272 806
- US-A1- 2015 114 711
- US-A1- 2020 303 841
- US-B1- 9 906 003
- US-B1- 9 979 167

## Beschreibung

### Gebiet

Die Erfindung betrifft einen Leitungsverteiler für abgeschirmte Einzelleitungen sowie ein Verfahren zur Herstellung eines solchen Leitungsverteilers.

### Hintergrund

Abgeschirmte elektrische Einzelleitungen werden beispielsweise im Automobilbereich dazu verwendet, um elektrische Aggregate und Komponenten miteinander zu verbinden. Dabei kommen Leitungsverteiler zum Einsatz, welche die von einer Batterie oder einem Generator abgehenden Leitungen auf mehrere Leitungen verzweigen, die ihrerseits zu elektrischen Verbrauchern führen. Um Material und Gewicht zu sparen, ist dabei eine generelle Tendenz zu immer höheren Betriebsspannungen zu beobachten, die geringere Leitungsquerschnitte gestatten. Das gilt insbesondere für Fahrzeuge mit einem rein elektrischen Antrieb oder mit einem Hybridantrieb. In solchen Fahrzeugen werden Geräte und Verbraucher in zunehmendem Maße daher aus Stromquellen mit erhöhter Spannung versorgt. Die dabei eingesetzten Stromquellen können für Spannungen von bis zu 1000 V ausgelegt sein. Verbraucher sind bei Elektrofahrzeugen beispielsweise ein Antriebsmotor sowie Heizgeräte. Wegen der hohen Betriebsspannungen werden für die Verbindung von Verbrauchern mit einer Batterie häufig Einzelleitungen eingesetzt, die einen elektrisch wirksamen Schirm aufweisen. Im Bereich des Leitungsverteilers ist es daher notwendig, die Schirme der Einzelleitungen zu kontaktieren und darüber hinaus die Verbindungsstücke der Einzelleitungen ebenfalls abzuschirmen, um eine durchgängige Abschirmung der von den hohen Betriebsspannungen erzeugten elektrischen Felder zu erzielen.

Aus der US 9,979,167 B1 ist ein Leitungsverteiler für geschirmte Einzelleitungen bekannt. Der Leitungsverteiler weist ein isolierendes Außengehäuse auf, das ein Verbindungsstück aufnimmt, an dem die Einzelleitungen miteinander verbunden sind. Zur Herstellung des Verteilers wird der Schirm der Einzelleitungen zurückgefaltet, um eine innere Hülse auf die innere Isolierung der Einzelleitung zu platzieren, wonach der Schirm über die innere Hülse zurückgefaltet wird. Eine äußere Hülse wird über die jeweiligen Schirme geschoben, um eine stabile kontaktieren der Schirme herzustellen. Die so vorbereiteten Einzelleitungen werden mit einem Verbindungsclip mechanisch gehalten hat und die Schirme werden mit dem Verbindungsglied elektrisch kontaktiert.

Die US 9,906,003 B1 beschreibt einen Leitungsverteiler für Einzelleitungen mit einem Schirm. Der Leitungsverteiler verfügt über ein elektrisch isolierendes Gehäuse. Die Leiter der Einzelleitungen sind über ein Verbindungsstück elektrisch miteinander verbunden. Die Schirme der Einzelleitungen werden auf dieselbe Weise wie bei der US 9,979,167 B1 mittels jeweils einer inneren und äußeren Hülse kontaktiert. Die Hülsen sind zylindrisch ausgebildet. Ein zweiteiliges Schirmblech umfasst zwei Halbschalen. Das Schirmblech ist mit federnden Kontaktlaschen versehen, welche die äußeren Hülsen kontaktieren.

Die EP 0 272 806B1 zeigt eine Kabelverbindung, die von einem metallischen Gehäuse umschlossen ist, das einen rohrförmigen mittleren Abschnitt und zwei konisch zulaufende Endteile aufweist. Um das Aufschieben der Endteile auf die Einzelleitungen zu erleichtern, sind die Endteile an ihren dünnen Enden in Einzelzungen 73 aufgeteilt. Die Endteile sind auf dem Schirm der zu verbindenden Einzelleitungen angeordnet.

Die US 2020/0303841 A1 betrifft einen Leitungsverteiler, mit dem eine erste Leitung mit einer zweiten und einer dritten Leitung verbunden ist. Ein erstes Gehäuseteil hat einen Kabelausgang für das erste Kabel und ein zweites Gehäuseteil hat Kabelausgänge für das zweite bzw. dritte Kabel. Der Kabelausgänge sind als integraler Bestandteil des Gehäuses ausgebildet und weisen elastische Klemmarme auf, die in die Isolierung der Kabel greifen. Die Klemmarme werden mit Kabelbindern fest gespannt.

Hiervon ausgehend hat die vorliegende Erfindung die Aufgabe, einen Leitungsverteiler zu schaffen, der einfach aufgebaut ist und gleichzeitig die eingangs beschriebenen Anforderungen erfüllt.

### Beschreibung der Erfindung

Zur Lösung dieser Aufgabe schlägt die Erfindung nach einem ersten Aspekt einen Leitungsverteiler für Einzelleitungen vor, die mit einem elektrisch leitenden Schirm abgeschirmt sind. Der Leitungsverteiler weist ein elektrisch isolierendes Außengehäuse auf, das ein Verbindungsstück aufnimmt, an der mindestens zwei Einzelleitungen elektrisch miteinander verbunden sind. Die Schirme der verbundenen Einzelleitungen sind mittels eines elektrisch leitenden Schirmgehäuse miteinander verbunden.

Das Schirmgehäuse umschließt den gesamten Bereich, wo die Einzelleitungen miteinander verbunden sind, und sorgt auf diese Weise für eine effektive Abschirmung von elektrischen Feldern, was insbesondere bei hohen Betriebsspannungen der Einzelleitungen vorteilhaft ist.

Unter den Schirmen der Einzelleitungen konische Stützhülsen angeordnet. Die konischen Stützhülsen heben die Schirme der Einzelleitungen an und vereinfachen dadurch das elektrische Kontaktieren der Schirme. Der Leitungsverteiler weist elektrisch leitende Verbindungskomponenten auf, die mit Aufnahmen versehen sind, deren Oberfläche komplementär zur Gestalt der konischen Stützhülsen ausgebildet sind. Die Verbindungskomponenten sind zwischen den elektrisch zu verbindenden Einzelleitungen angeordnet und stellen einen elektrischen Kontakt zu den Schirmen der Einzelleitungen her. Mittels der Verbindungskomponenten gelingt es, durch bloßes Aufpressen der Verbindungskomponenten auf die Stützhülsen einen zuverlässigen Kontakt zu den Schirmen aller Einzelleitungen herzustellen, die durch das Kontaktelement geführt sind. Dadurch ist eine einfache Montage gewährleistet.

Mit Vorteil können die konischen Stützhülsen an einem Ende einen Kragen aufweisen. Der Kragen bildet einen Anschlag für die Schirme der Einzelleitungen, wenn die Stützhülsen unter die Schirme geschoben werden.

Bei einer Weiterbildung der Erfindung weist der Leitungsverteiler mehrere Verbindungsstücke von Einzelleitungen auf, die durch einen isolierenden Einleger voneinander getrennt sind. Mit dem isolierenden Einleger wird sichergestellt, dass im Inneren des Leitungsverteilers kein Kurzschluss durch Berührung von Kontaktstellen oder Leitern auftritt, die auf einem unterschiedlichen elektrischen Potenzial liegen.

Mit Vorteil ist das Schirmgehäuse einteilig ausgebildet. Das einteilige Schirmgehäuse ist einfach und kostengünstig herzustellen. Das Schirmgehäuse kann insbesondere aus einem elektrisch leitenden Schirmblech hergestellt sein.

Bei einer zweckmäßigen Ausführungsform ist das Außengehäuse des Leitungsverteilers mit Haltekappen an einer Position fixiert, wo es das Schirmblech umschließt. Die Haltekappen können zum Beispiel ohne Werkzeug durch Rastmittel auf dem Außengehäuse montiert werden.

Bei einer vorteilhaften Ausführungsform weist das Außengehäuse federnde Laschen auf, die eine Isolierung einer Einzelleitung klemmen. Durch diese Ausgestaltung kann das Außengehäuse eine Zugentlastung für die Einzelleitungen bereitstellen.

Bei einer Weiterbildung des Leitungsverteiler ist an dem Außengehäuse ein Fixierelement angeordnet ist, das federnde Laschen aufweist, die eine Isolierung einer Einzelleitung klemmen. Mittels des Fixierelementes wird auf einer gegenüberliegenden Seite des Außengehäuses eine Zugentlastung gebildet, wo es nicht möglich ist, federnde Laschen an dem Außengehäuse selbst anzubringen.

Mit Vorteil weisen die Haltekappen Durchgangsöffnungen für die Einzelleitungen auf und sind so ausgebildet, dass die Haltekappen, die an dem Außengehäuse bzw. an dem Fixierelement angeordneten federnden Laschen komprimieren. Auf diese Weise werden auf beiden Seiten des Außengehäuses Zugentlastungen für die Einzelleitungen bereitgestellt, ohne dass hierfür zusätzliche Montageschritte notwendig sind. D.h., wenn die Haltekappen auf das Außengehäuse aufgesetzt und verrastet werden, wird gleichzeitig das Außengehäuse positioniert und für jede Einzelleitung eine Zugentlastung gebildet.

Nach einem zweiten Aspekt der Erfindung wird ein Verfahren zur Montage eines Leitungsverteilers gemäß dem ersten Aspekt der Erfindung vorgeschlagen. Das Verfahren umfasst folgende Schritte:
- Aufschieben von Haltekappen, Verbindungskomponenten, eines Fixierelements, eines Außengehäuses und Dichtungen,
- Abisolieren der zu verbindenden Einzelleitungen;
- Kürzen der Schirme der Einzelleitungen;
- Aufschieben der konischen Stützhülsen unter die Schirme der Einzelleitungen;
- elektrisch leitendes Verbinden der Leiter der Einzelleitungen;
- Montieren eines elektrisch isolierenden Einlegers, so dass eine oder mehrere Verbindungsstellen elektrisch isoliert sind;
- Aufpressen der Verbindungskomponenten auf die konischen Stützhülsen in axialer Richtung der konischen Stützhülsen;
- Aufschieben eines Schirmgehäuses über die Verbindungskomponente und den Einleger;
- Positionieren eines Außengehäuses über dem Schirmgehäuse; und
- Fixierung des Außengehäuses mit Haltekappen.

Das erfindungsgemäße Verfahren ermöglicht eine einfache und zuverlässige Herstellung eines erfindungsgemäßen Leitungsverteilers.

Bei einer Weiterbildung umfasst das Verfahren weiterhin den Schritt, dass nach dem Positionieren des Außengehäuses zusätzlich ein Fixierelement positioniert wird. Mit dem Fixierelement werden die Einzelleitungen positioniert und im Zusammenwirken mit einer Haltekappe eine Zugentlastung für die Einzelleitungen bereitgestellt.

Nach einem dritten Aspekt der Erfindung wird ein Kabelbaum vorgeschlagen; der mehrere Einzelleitungen und einen Leitungsverteiler nach dem ersten Aspekt der Erfindung umfasst.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine Gesamtansicht eines erfindungsgemäßen Leitungsverteilers;
- Fig. 2: eine Anordnung aus Verbindungsstücken und der in dem Leitungsverteiler aus Figur 1 verbundenen Einzelleitungen;
- Fig. 3A: die Anordnung aus Figur 2 mit einer um die Verbindungsstücke angeordneten isolierenden Einlegerhälfte;
- Fig. 3B: die Anordnung aus Figur 3A mit vollständig geschlossenem Einleger und mit Verbindungskomponenten;
- Fig. 4A: auf Stützhülsen aufgepresste Verbindungskomponenten;
- Fig. 4B: einen vergrößerten Ausschnitt aus Figur 3B;
- Fig. 5: die Anordnung aus Figur 3B mit einem Schirmblech und Dichtungen für die Einzelleitungen;
- Fig. 6: die Anordnung aus Figur 5 mit einem aufgeschobenen Außengehäuse und einem Fixierelement; und
- Fig. 7: ein schematisches Flussdiagramm für ein Herstellungsverfahren eines erfindungsgemäßen Leitungsverteilers.

Gleiche oder ähnliche Elemente sind in den Figuren mit gleichen oder ähnlichen Bezugszeichen versehen.

### Ausführungsbeispiel

Unter einer Einzelleitungen ist im Kontext der vorliegenden Anmeldung eine Leitung mit einem einzigen Leiter zu verstehen, der von einer Isolierung umgeben ist. Der Leiter kann als massiver Leiter oder als Litzenleiter ausgebildet sein. Vorliegend weist die Einzelleitung zusätzlich noch einen elektrisch leitenden Schirm auf.

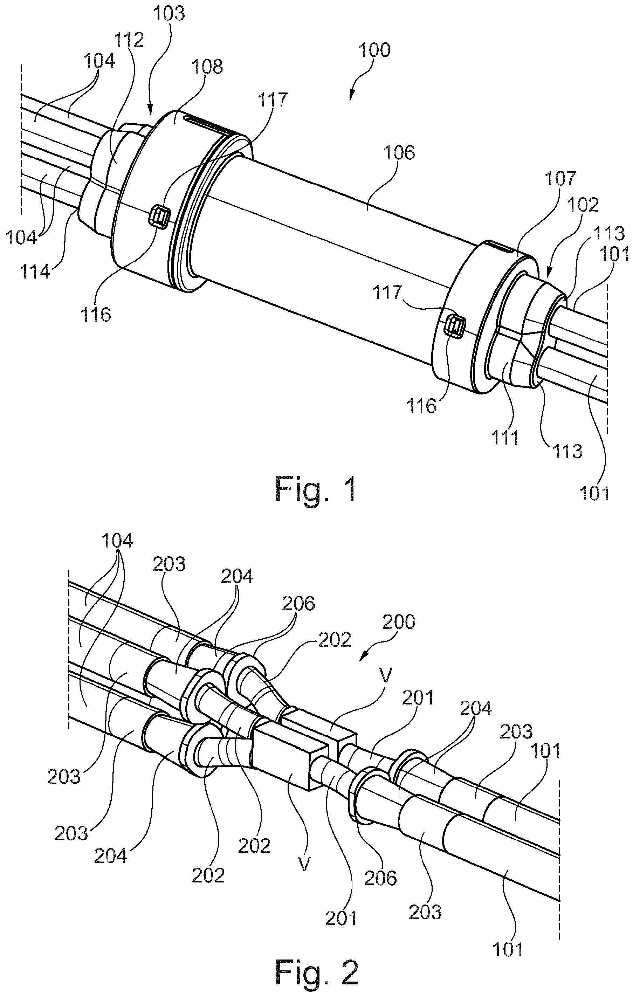

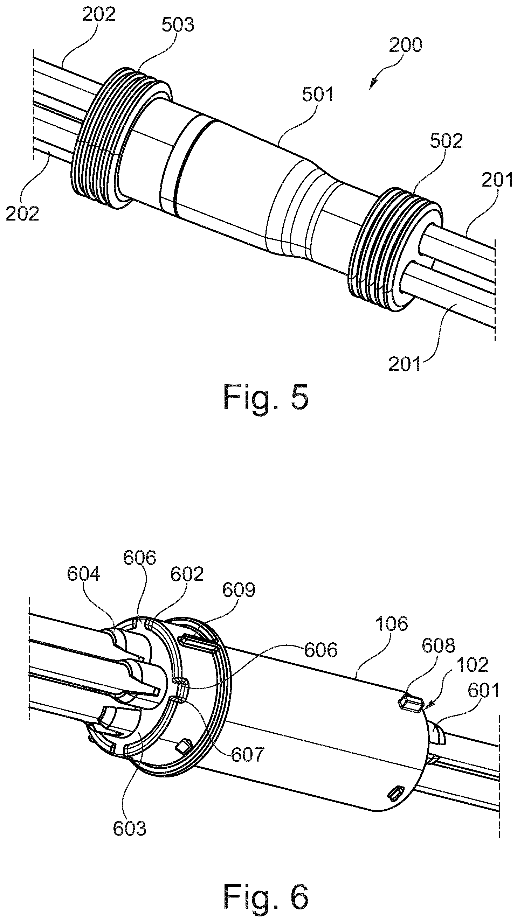

Figur 1 zeigt einen erfindungsgemäßen Leitungsverteiler 100 in einer perspektivischen Gesamtansicht von außen. Der Leitungsverteiler weist zwei Zugangsleitungen 101 auf, die an einem Ende 102 in den Leitungsverteiler 100 hineinführen und zum Beispiel mit einer Batterie in einem Elektrofahrzeug verbunden sind. An einem anderen Ende 103 führen vier abgehende Leitungen 104 aus dem Leitungsverteiler 100 hinaus. Die abgehenden Leitungen 104 sind beispielsweise mit elektrischen Verbrauchern in dem Elektrofahrzeug verbunden. Solche Verbraucher sind zum Beispiel Antriebsmotoren, Stelleinrichtungen sowie Heiz- und Kühlsysteme. Bei den Leitungen 101,104 handelt es sich um abgeschirmte Einzelleitungen. Der elektrische Schirm der Einzelleitungen schirmt die von den hohen elektrischen Betriebsspannungen erzeugten elektrischen Felder ab. Bei dem dargestellten Ausführungsbeispiel sind jeweils eine Zugangsleitung 101 mit zwei abgehenden Leitungen 104 an zwei Verbindungsstücken V (Fig. 2) miteinander verbunden, die in einem isolierenden zylindrischen Außengehäuse 106 aufgenommen sind. Die Verbindungsstücke werden weiter unten noch näher beschrieben. An den Enden 102,103 des Außengehäuses 106 sind Haltekappen 107 bzw. 108 angeordnet, die das Außengehäuse 106 über den Verbindungsstücken positionieren. Die Haltekappen 107,108 sind mit Ausstülpungen 111,112 versehen, die Durchgangsöffnungen 113,114 für die Einzelleitungen 101 bzw. 104 aufweisen. Die Funktion der Ausstülpungen 111,112 an den Haltekappen 107,108 wird weiter unten im Zusammenhang mit Figur 6 erläutert. Um das Außengehäuse 106 mit dem Haltekappen 107,108 zu verbinden, weist das Außengehäuse 106 Rastnasen 116 auf, die in entsprechenden Öffnungen 117 verrasten, die in den Haltekappen 107,108 vorgesehen sind. Das Außengehäuse ist zum Beispiel aus faserverstärktem Kunststoff hergestellt, insbesondere aus einem Kunststoff mit der Bezeichnung PA66 GF35.

Auch wenn die Erfindung mit Bezug auf ein Ausführungsbeispiel mit zwei Zugangsleitungen 101 und mit vier abgehende Leitungen beschrieben ist, ist die Erfindung hierauf nicht beschränkt. Bei anderen Ausführungsbeispielen sind mehr als zwei Zugangsleitungen 101, mehr oder weniger als vier abgehende Leitungen 104 und mehr als zwei Verbindungsstücke V vorgesehen. Außerdem sind bei anderen Ausführungsbeispielen mehr oder weniger als zwei abgehende Leitungen 104 mit einer Zugangsleitung 101 an einer Verbindungsstelle V verbunden. Auf die genaue Anzahl von Zugangsleitungen, abgehenden Leitungen und Verbindungsstücke V kommt es bei der Erfindung nicht an.

Figur 2 veranschaulicht eine Anordnung 200 aus zwei Verbindungsstücke V, an denen jeweils ein Leiter 201 mit zwei Leitern 202 von zwei abgehenden Einzelleitungen 104 verbunden ist. Die Verbindungsstücke V sind quaderförmige Metallkörper mit einem Durchgangsloch, in welches die Leiter 201,202 eingesteckt und mit den Verbindungsstücken V verschweißt sind. Die Verbindungsstücke V bilden Verbindungsstellen zwischen den Leitern. Außerhalb der Verbindungsstücke V sind die Leiter 201,202 noch mit einer Isolierung dargestellt, die den Leiter gegen einen elektrisch leitenden Schirm 203 isoliert. Auf den Einzelleitern 101 und 104 sind konische Stützhülsen 204 angeordnet. Die konischen Stützhülsen 204 haben die Gestalt eines Kegelstumpfes. Das dünnere Ende des Kegelstumpfes ist so unter den Schirm 203 geschoben, dass der Schirm 203 auf einer konischen Mantelfläche der Stützhülsen 204 aufliegt. Zur besseren Veranschaulichung ist in Figur 2 der Schirm 203 verkürzt dargestellt, sodass nur ein kleines Stück von dem dünneren Ende der Stützhülsen 204 von dem Schirm 203 überdeckt ist. Auf diese Weise sind die Stützhülsen 204 in Figur 2 für den Betrachter besser sichtbar. An ihrem dickeren Ende weisen die Stützhülsen 204 einen Kragen 206 auf, der einen Anschlag für den Schirm 203 bildet.

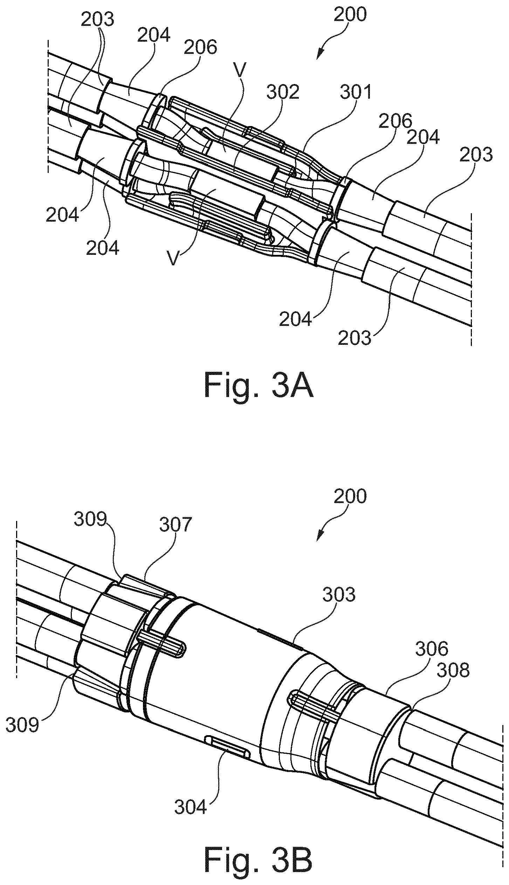

Figur 3A zeigt die Anordnung 200 in einer perspektivischen Ansicht von oben. Eine Einlegerhälfte 301 aus elektrisch isolierendem Material erstreckt sich zwischen den Kragen 206 der Stützhülsen 204 und umgibt die Leiter 201,202 sowie die Verbindungsstücke V. Die Einlegerhälfte 301 weist eine Zwischenwand 302 auf, welche die Verbindungsstücke V voneinander trennt, sodass ein Kurzschluss zwischen den Verbindungsstücken V sicher verhindert ist.

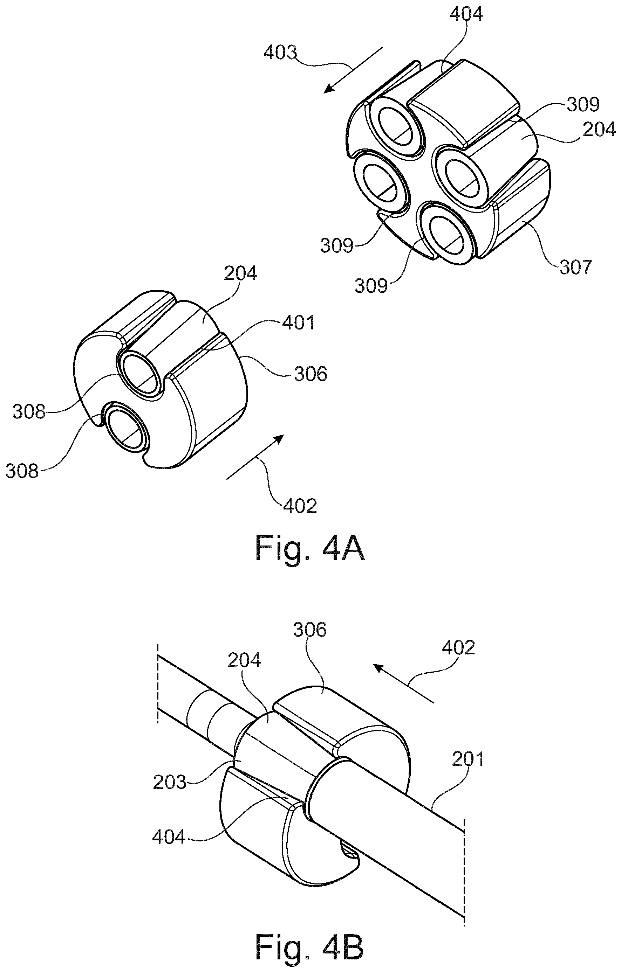

Figur 3B zeigt die Anordnung 200 aus Figur 3A mit einer weiteren Einlegerhälfte 303, die auf die Einlegerhälfte 301 aufgesetzt und mit dieser mittels Rastmitteln 304 verrastet ist. Die Einlegerhälfte 303 weist ebenfalls eine Zwischenwand 302 auf, die in Figur 3B nicht sichtbar ist und an die Zwischenwand 302 der Einlegerhälfte 301 angrenzt, sodass in einem von den Einlegerhälften 301,303 umschlossenen Innenraum eine durchgängige Trennwand entsteht, welche die Verbindungsstücke V elektrisch voneinander trennt. Die Einlegerhälften 301,302 bilden ein isolierendes Gehäuse um die Verbindungsstücke V. Auf die Stützhülsen 204 sind elektrisch leitende Verbindungskomponenten 306,307 aufgepresst. Die Verbindungskomponenten 306,307 sind zum Beispiel aus Kupfer hergestellt. Zu diesem Zweck weisen die Verbindungskomponenten 306,307 Aufnahmen 308,309 auf, die komplementär zu der Außenkontur der Stützhülsen 204 gestaltet sind. Durch das Aufpressen der Verbindungskomponenten 306,307 werden die Schirme 203 der Einzelleitungen 201,202 kontaktiert, wie im Folgenden mit Bezug auf die Figuren 4A und 4B näher erläutert wird.

Figur 4A illustriert die beiden Verbindungskomponenten 306,307. In der Verbindungskomponente 306 sind Aufnahmen 308 angeordnet. Die Aufnahmen 308 sind am Außenumfang der Verbindungskomponente 306 beispielsweise auf einem Umfangswinkel der Stützhülsen 204 von ungefähr 90° offen, sodass eine schlitzförmige Öffnung 401 entsteht. Die Öffnung 401 erstreckt sich in Umfangsrichtung der Verbindungskomponente 306 nur so weit, dass die Stützhülse 204 nicht aus der Aufnahme 308 herausfallen kann. Die Aufnahmen 308 weisen eine konische Gestalt auf, die der Außenkontur der Stützhülsen 204 entspricht. Wenn die Verbindungskomponente 306 auf die Stützhülsen in Richtung des Pfeils 402 aufgepresst wird, dann übt die Innenwand der Aufnahme 308 eine Presskraft auf die Umfangswand der Stützhülsen 204 aus.

Entsprechendes gilt für die Verbindungskomponente 307, die vier Aufnahmen 309 für Stützhülsen 204 aufweist. Die Aufnahmen 309 der Verbindungskomponente 307 sind entsprechend wie die Aufnahmen 308 der Verbindungskomponente 306 gestaltet. Wenn daher die Verbindungskomponente 307 in Richtung des Pfeils 403 gepresst wird, dann übt die Innenwand der Aufnahme 309 eine Presskraft auf die Umfangswand der Stützhülsen 204 aus. Dieser Umstand wird dazu ausgenutzt, um die Schirme der Einzelleitungen 201,202 mit den Verbindungskomponente 306,307 elektrisch zu kontaktieren, wie mit Bezug auf Figur 4B erläutert wird. Ebenso wie die Verbindungskomponente 306 weist auch die Verbindungskomponente 307 schlitzförmige Öffnungen 404 auf, deren Größe so begrenzt ist, dass die Stützhülsen 204 nicht aus den Aufnahmen 309 herausfallen können. Die Öffnungen 401 und 404 erleichtern das Einfädeln der Verbindungskomponenten 306,307 auf die Stützhülsen 204.

In Figur 4B ist ein vergrößerter Ausschnitt aus Figur 3B dargestellt. Der Ausschnitt zeigt die Verbindungskomponente 306, die auf eine Stützhülse 204 aufgepresst ist, die auf der Einzelleitung 201 angeordnet ist. Der Schirm 203 liegt auf dem Außenumfang der Stützhülse 204 und wird von der Verbindungskomponente 306 elektrisch kontaktiert. Auf diese Weise wird von der Verbindungskomponente 306 zu den Schirmen 203 der Zugangsleitungen 201 ein elektrischer Kontakt hergestellt. In gleicher Weise stellt die Verbindungskomponente 307 einen elektrischen Kontakt zu den Schirmen 203 der abgehenden Leitungen 202 her.

In den Verbindungskomponenten ist die Anzahl der jeweiligen Aufnahmen Anzahl der Zugangsleitungen bzw. abgehenden Leitungen angepasst, sodass für jede Leitung eine Aufnahme zur Verfügung steht.

Figur 5 zeigt die Anordnung 200 aus Figur 3B mit einem über die Verbindungskomponenten 306,307 und die Einlegerhälften 301,303 angeordneten einteiligen Schirmgehäuse oder Schirmblech 501, das vorzugsweise aus einem elektrisch leitenden Metallblech hergestellt ist. Das Schirmblech 501 ist einstückig hergestellt und weist in axialer Richtung eine solche Länge auf, dass das Schirmblech 501 mit den Verbindungskomponenten 306,307 im Wesentlichen bündig abschließt. Das Schirmblech 501 sitzt stramm auf den Verbindungskomponenten 306,307 und stellt damit einen elektrischen Kontakt zu den Verbindungskomponenten 306,307 her. Über die Verbindungskomponenten 306,307 ist das Schirmblech 501 leitend mit den Schirmen 203 der Einzelleitungen 101,104 verbunden. Dadurch wird eine durchgängige Abschirmung aller stromführenden Teile in dem Leitungsverteiler erzielt.

An den stirnseitigen Enden des Schirmbleches 501 und angrenzend an die Verbindungskomponente 306,307 ist auf die Zugangsleitungen 201 eine Dichtung 502 und auf die abgehenden Leitungen 202 eine Dichtung 503 aufgeschoben. Die Dichtungen 502,503 sind zum Beispiel aus Silikon hergestellt.

Wie in Figur 6 zu sehen ist, ist über dem Schirmblech 501 und den Dichtungen 502,503 das Außengehäuse 106 angeordnet. An dem Ende 102 sind an dem Außengehäuse 106 federnde Laschen 601 angeordnet, die eine Fixierung der Einzelleitungen 201 bewirken, wenn die Haltekappe 107 auf das Außengehäuse 106 aufgesetzt ist. Die Ausstülpung 111 an der Haltekappe 107 ist so bemessen, dass die federnden Laschen 601 zusammengepresst werden und eine Isolierung der Einzelleitungen 101 klemmen, wodurch eine Zugentlastung für die Einzelleitungen 101 gebildet ist. Auf die abgehenden Leitungen 104 ist ein Fixierelement 602 aufgesetzt. Das Fixierelement 602 ist aus einer Scheibe 603, gebildet, von der für jede abgehende Leitung 104 zwei federnde Laschen 604 abgehen. Wenn die Haltekappe 108 auf das Außengehäuse 106 aufgesetzt ist, komprimiert die Ausstülpung 112 an der Haltekappe 108 die federnden Laschen 604, welche eine Isolierung der abgehenden Leitungen 104 klemmen und auf diese Weise eine Zugentlastung für die abgehenden Leitungen 104 bereitstellen. An der Scheibe 603 sind radiale Vorsprünge 606 vorgesehen, die in entsprechende Ausnehmungen 607 in der Stirnseite des Außengehäuse 106 eingreifen und so die Drehposition des Fixierelementes 602 festlegen. Das Außengehäuse 106 ist mit Führungsleisten 608,609 versehen, die in entsprechende Schlitze in den Haltekappen 107,108 eingreifen und gemeinsam mit den Rastnasen 116 und den Rastöffnungen 117 die Drehstellung der Haltekappen 107,108 festlegen.

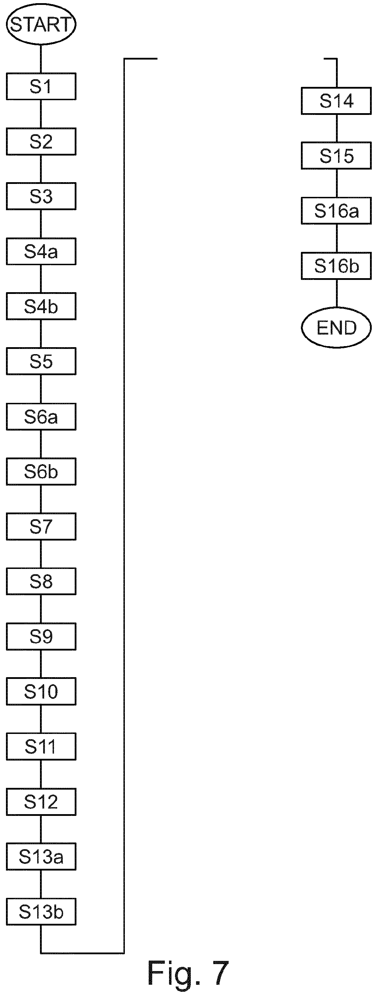

Figur 7 illustriert ein Flussdiagramm für ein Verfahren zur Herstellung eines Erfindungsgemäßen Leitungsverteilers. In einem ersten Schritt S1 wird auf die Zugangsleitungen 101 die Haltekappe 107 und auf den abgehenden Leitungen 104 die Haltekappe 108 aufgefädelt bzw. geparkt. In einem Schritt S2 wird das Fixierelement 602 mit den federnden Laschen voraus auf den abgehenden Leitungen 104 geparkt. In einem Schritt S3 wird das Außengehäuse 106 mit den Federn den Laschen 601 voraus auf den Zugangsleitungen 101 geparkt. In einem Schritt S4a wird die Dichtung 502 auf den Zugangsleitungen 101 und in einem Schritt S4b die Dichtung 503 auf den abgehenden Leitungen 104 geparkt. Dann wird in einem Schritt S5 das Schirmblech 501 auf die Zugangsleitungen 101 geschoben. In einem Schritt S6a wird die Verbindungskomponente 306 auf die Zugangsleitungen 101 und in einem Schritt S6b die Verbindungskomponente 307 auf die abgehenden Leitungen geschoben. In einem Schritt S6 werden die Einzelleitungen 101,104 abisoliert und der Schirm 203 der Einzelleitungen wird gekürzt. In einem Schritt S8 werden die konischen Stützhülsen 204 unter die Schirme 203 der Einzelleitungen geschoben. In einem Schritt S9 werden die Leiter 201,202 der Einzelleitungen mit jeweils einem der Verbindungsstücke V verschweißt. In einem Schritt S10 werden die Einlegerhälften 301,303 montiert und miteinander verrastet. In einem Schritt S11 werden die Verbindungskomponenten 306,307 auf die Stützhülsen 204 geschoben, wo sie mit Presssitz sitzen, sodass die Schirme 203 der Einzelleitungen 101,104 von den Verbindungskomponenten kontaktiert werden. In einem Schritt S12 wird das Schirmblech 501 über die Verbindungskomponente 306,307 und die Einlegerhälften 301,303 geschoben, sodass die Enden des Schirmes 501 bündig mit den Verbindungskomponenten abschließen. In einem Schritt S13a wird die Dichtung 502 an die Verbindungskomponente 306 und in einem Schritt S13b die Dichtung 503 an die Verbindungskomponente 307 herangeschoben, sodass die Dichtungen an den Verbindungskomponenten anliegen. In einem Schritt S14 wird das Außengehäuse 106 positioniert, sodass die soweit fertig gestellte Anordnung im Inneren des Außengehäuses aufgenommen ist. In einem Schritt S15 wird das Fixierelement 602 an dem Außengehäuse positioniert, sodass die Vorsprünge 606 des Fixierelementes 602 in die Ausnehmungen 607 des Außengehäuses eingreifen. Schließlich wird in einem Schritt S16a die Haltekappe 107 und in einem Schritt S16b die Haltekappe 108 mit dem Außengehäuse 106 verrastet.

In den Ansprüchen schließen die Wörter "aufweisen" und "umfassen" nicht andere Elemente oder Schritte aus und der unbestimmte Artikel "ein" schließt eine Mehrzahl nicht aus.

**Bezugszeichenliste**

| | | | |
|---|---|---|---|
| 100 | Leitungsverteiler | 501 | Schirmgehäuse/Schirmblech |
| 101 | Zugangsleitungen | 502,503 | Dichtungen |
| 102 | Ende des Leitungsverteilers | | |
| 103 | Ende des Leitungsverteilers | 601 | Federnde Laschen |
| 104 | abgehende Leitungen | 602 | Fixierelement |
| | | 603 | Scheibe |
| 106 | Außengehäuse | 604 | Federnde Laschen |
| 107, 108 | Haltekappen | 606 | Vorsprünge |
| 111,112 | Ausstülpungen | 607 | Ausnehmungen |
| 113,114 | Durchgangsöffnungen | 608,609 | Führungsleisten |
| 116 | Rastnasen | | |
| 117 | Öffnungen | V | Verbindungsstück |
| 200 | Anordnung | | |
| 201,202 | Leiter | | |
| 203 | Schirm | | |
| 204 | Stützhülsen | | |
| 206 | Kragen | | |
| 301,303 | Einlegerhälfte | | |
| 302 | Zwischenwand | | |
| 306,307 | Verbindungskomponente | | |
| 308,309 | Aufnahme | | |
| 401 | Öffnung | | |
| 402,403 | Pfeil | | |
| 404 | Öffnung | | |

## Patentansprüche

1. Leitungsverteiler für Einzelleitungen (101;104), die mit einem elektrisch leitenden Schirm (203) abgeschirmt sind, wobei der Leitungsverteiler ein elektrisch isolierendes Außengehäuse (106) aufweist, das ein Verbindungsstück (V) aufnimmt, mit dem die Leiter (201,202) von mindestens zwei Einzelleitungen (101,104) elektrisch miteinander verbindbar sind, wobei mehrere Einzelleitungen (101) an einem ersten Ende (102) in das Außengehäuse hineinführbar und mehrere Einzelleitungen (104) an einem zweiten Ende (103) aus dem Außengehäuse herausführbar sind, **dadurch gekennzeichnet, dass** unter den Schirmen (203) der Einzelleitungen (101,104) konische Stützhülsen (204) angeordnet sind, dass der Leitungsverteiler jeweils eine elektrisch leitende Verbindungskomponente (306,307) an dem ersten und dem zweiten Ende (101,102) aufweist, die mit Aufnahmen (308;309) versehen sind, deren Oberfläche komplementär zur Gestalt der konischen Stützhülsen (204) ausgebildet sind, und dass die Verbindungskomponenten (306,307) zwischen den elektrisch zu verbindenden Einzelleitungen (101,104) angeordnet sind und einen elektrischen Kontakt zu den Schirmen (203) der Einzelleitungen herstellen und dass die Schirme (203) der verbundenen Einzelleitungen mittels eines elektrisch leitenden Schirmgehäuses (501) miteinander verbunden sind.

2. Leitungsverteiler nach Anspruch 1, **dadurch gekennzeichnet, dass** die konischen Stützhülsen (204) an einem Ende einen Kragen (206) aufweisen.

3. Leitungsverteiler nach Anspruch 1 oder 2, **dadurch gekennzeichnet, dass** der Leitungsverteiler mehrere Verbindungsstücke (V) von Einzelleitungen (101,104) aufweist, die durch einen isolierenden Einleger (301,303) voneinander getrennt sind.

4. Leitungsverteiler nach einem der vorstehenden Ansprüche, **dadurch gekennzeichnet, dass** das Schirmgehäuse (501) einteilig ausgebildet ist.

5. Leitungsverteiler nach einem der vorstehenden Ansprüche, **dadurch gekennzeichnet, dass** das Schirmgehäuse (501) aus einem elektrisch leitenden Schirmblech hergestellt ist.

6. Leitungsverteiler nach einem der vorstehenden Ansprüche, **dadurch gekennzeichnet, dass** das Außengehäuse (106) mit Haltekappen (107,108) an einer Position fixiert ist, wo es das Schirmblech (501) umschließt.

7. Leitungsverteiler nach einem der vorstehenden Ansprüche, **dadurch gekennzeichnet, dass** das Außengehäuse federnde Laschen (601) aufweist, die eine Isolierung einer Einzelleitung klemmen.

8. Leitungsverteiler nach einem der vorstehenden Ansprüche, **dadurch gekennzeichnet, dass** an dem Außengehäuse ein Fixierelement angeordnet ist, das federnde Laschen (604) aufweist, die eine Isolierung einer Einzelleitung klemmen.

9. Leitungsverteiler nach Anspruch 7 oder 8, wenn abhängig von Anspruch 6, **dadurch gekennzeichnet, dass** die Haltekappen (107,108) Durchgangsöffnungen für die Einzelleitungen aufweisen und so ausgebildet sind, dass die Haltekappen (107,108) die an dem Außengehäuse (106) bzw. an dem Fixierelement (602) angeordneten federnden Laschen (601,604) komprimieren.

10. Verfahren zur Montage eines Leitungsverteiler das nach einem der vorstehenden Ansprüche, wobei das Verfahren folgende Schritte aufweist:
- Aufschieben (S1-S6b) von Haltekappen (107,108), Verbindungskomponenten (306,307), eines Fixierelements (602), eines Außengehäuses (106) und Dichtungen (502,503),
- Abisolieren (S7) der zu verbindenden Einzelleitungen (101,104);
- Kürzen (S7) der Schirme (203) der Einzelleitungen (101,104);
- Aufschieben (S8) der konischen Stützhülsen (204) unter die Schirme der Einzelleitungen;
- elektrisch leitendes Verbinden (S9) der Leiter (201,202) der Einzelleitungen;
- Montieren (S19) eines elektrisch isolierenden Einlegers (301,303), so dass eine oder mehrere Verbindungsstellen elektrisch isoliert sind;
- Aufpressen (S11) der Verbindungskomponenten auf die konischen Stützhülsen in axialer Richtung der konischen Stützhülsen;
- Aufschieben (S12) eines Schirmgehäuses (501) über die Verbindungskomponenten (306,307) und den Einleger (301,303);
- Positionieren (S15) eines Außengehäuses (106) über dem Schirmgehäuse (501); und
- Fixierung (S16a,16b) des Außengehäuses (106) mit Haltekappen (107,108).

11. Verfahren nach Anspruch 10, **dadurch gekennzeichnet, dass** das Verfahren weiterhin den Schritt umfasst, dass nach dem Positionieren (S15) des Außengehäuses (106) zusätzlich eine Fixierelement (602) positioniert wird.

12. Kabelbaum, der mehrere Einzelleitungen (101,104) und einen Leitungsverteiler (100) nach einem der Ansprüche 1-9 umfasst.

## Claims

1. Cable distributor for individual cables (101;104) that are shielded by an electrically conductive shield (203), the cable distributor having an electrically insulating outer housing (106), which receives a connection piece (V) with which the conductors (201,202) of at least two individual cables (101,104) are electrically connectable to one another, wherein a plurality of individual cables (101) can be introduced at a first end (102) into the outer housing and a plurality of individual cables (104) can be led at a second end (103) out of the outer housing,
**characterized in that** there are conical support sleeves (204) arranged under the shields (203) of the individual cables (101,104), **in that** the cable distributor in each case has an electrically conductive connection component (306,307) at the first and the second end (101,102) that are provided with receivers (308;309), the surfaces of which are realized so as to be complementary to the shape of the conical support sleeves (204), and **in that** the connection components (306,307) are arranged between the individual cables (101,104) to be electrically connected, and effect an electrical contact to the shields (203) of the individual cables, and **in that** the shields (203) of the connected individual cables are connected to each other by means of an electrically conductive shield housing (501).

2. Cable distributor according to Claim 1, **characterized in that** the conical support sleeves (204) have a collar (206) at one end.

3. Cable distributor according to Claim 1 or 2, **characterized in that** the cable distributor has a plurality of connection pieces (V) of individual cables (101,104), which are separated from each other by an insulating insert (301,303).

4. Cable distributor according to any one of the preceding claims, **characterized in that** the shield housing (501) is realized as a single part.

5. Cable distributor according to any one of the preceding claims, **characterized in that** the shield housing (501) is produced from an electrically conductive shield plate.

6. Cable distributor according to any one of the preceding claims, **characterized in that** the outer housing (106) is fixed by retaining caps (107,108) at a position where it encloses the shield plate (501).

7. Cable distributor according to any one of the preceding claims, **characterized in that** the outer housing has resilient tabs (601) that clamp an insulation of an individual cable.

8. Cable distributor according to any one of the preceding claims, **characterized in that** arranged on the outer housing there is a fixing element, which has resilient tabs (604) that clamp an insulation of an individual cable.

9. Cable distributor according to Claim 7 or 8, when dependent on Claim 6, **characterized in that** the retaining caps (107,108) have through-openings for the individual cables and are realized in such a manner that the retaining caps (107,108) compress the resilient tabs (601,604) arranged on the outer housing (106), or on the fixing element (602).

10. Method for assembling a cable distributor according to any one of the preceding claims, the method comprising the following steps:
- pushing on (S1-S6b) retaining caps (107,108), connection components (306,307), a fixing element (602), an outer housing (106) and seals (502,503),
- stripping the insulation (S7) from the individual cables (101,104) to be connected;
- shortening (S7) the shields (203) of the individual cables (101,104);
- pushing on (S8) the conical support sleeves (204) under the shields of the individual cables;
- connecting (S9) the conductors (201,202) of the individual cables in an electrically conductive manner;
- mounting (S19) an electrically insulating insert (301,303), such that one or more connection points are electrically insulated;
- pressing (S11) the connection components onto the conical support sleeves in the axial direction of the conical support sleeves;
- pushing (S12) a shield housing (501) over the connection components (306,307) and the insert (301,303);
- positioning (S15) an outer housing (106) over the shield housing (501); and
- fixing (S16a,16b) the outer housing (106) by means of retaining caps (107,108).

11. Method according to Claim 10, **characterized in that** the method further comprises the step that, following positioning (S15) of the outer housing (106), a fixing element (602) is additionally positioned.

12. Wiring harness, comprising a plurality of individual cables (101,104) and a cable distributor (100) according to any one of Claims 1-9.

## Revendications

1. Répartiteur de lignes destiné à des lignes individuelles (101 ; 104) blindées par un blindage électriquement conducteur (203), le répartiteur de lignes présentant un boîtier extérieur (106) électriquement isolant qui reçoit une pièce de connexion (V) au moyen de laquelle les conducteurs (201,202) d'au moins deux lignes individuelles (101,104) peuvent être connectés électriquement les uns aux autres, plusieurs lignes individuelles (101) pouvant être acheminées dans le boîtier extérieur à une première extrémité (102) et plusieurs lignes individuelles (104) pouvant être acheminées hors du boîtier extérieur à une seconde extrémité (103),
**caractérisé en ce que** des manchons de support coniques (204) sont disposés sous le blindage (203) des lignes individuelles (101,104), **en ce que** le répartiteur de lignes présente respectivement à la première et à la seconde extrémité (101,102) un composant de connexion électriquement conducteur (306,307) qui est pourvu de logements (308 ; 309) dont la surface est réalisée de manière complémentaire à la forme des manchons de support coniques (204), et **en ce que** les composants de connexion (306,307) sont disposés entre les lignes individuelles (101,104) à connecter électriquement et établissent un contact électrique avec les blindages (203) des lignes individuelles, et **en ce que** les blindages (203) des lignes individuelles connectées sont reliés les uns aux autres par l'intermédiaire d'un boîtier de blindage électriquement conducteur (501).

2. Répartiteur de lignes selon la revendication 1, **caractérisé en ce que** les manchons de support coniques (204) présentent un collet (206) à une extrémité.

3. Répartiteur de lignes selon la revendication 1 ou 2, **caractérisé en ce que** le répartiteur de lignes présente plusieurs pièces de connexion (V) de lignes individuelles (101,104) qui sont séparées les unes des autres par un insert isolant (301,303).

4. Répartiteur de lignes selon l'une quelconque des revendications précédentes, **caractérisé en ce que** le boîtier de blindage (501) est réalisé d'une seule pièce.

5. Répartiteur de lignes selon l'une quelconque des revendications précédentes, **caractérisé en ce que** le boîtier de blindage (501) est fabriqué à partir d'une tôle de blindage électriquement conductrice.

6. Répartiteur de lignes selon l'une quelconque des revendications précédentes, **caractérisé en ce que** le boîtier extérieur (106) est fixé par des capuchons de maintien (107,108) dans une position où il entoure la plaque de blindage (501).

7. Répartiteur de lignes selon l'une quelconque des revendications précédentes, **caractérisé en ce que** le boîtier extérieur présente des pattes élastiques (601) qui enserrent l'isolation d'une ligne individuelle.

8. Répartiteur de lignes selon l'une quelconque des revendications précédentes, **caractérisé en ce qu'**il est prévu sur le boîtier extérieur un élément de fixation présentant des pattes élastiques (604) qui enserrent l'isolation d'une ligne individuelle.

9. Répartiteur de lignes selon la revendication 7 ou 8, lorsqu'elle dépend de la revendication 6, **caractérisé en ce que** les capuchons de maintien (107,108) présentent des ouvertures de passage pour les lignes individuelles et sont conçus de telle sorte que les capuchons de maintien (107,108) compriment les pattes élastiques (601, 604) disposées sur le boîtier extérieur (106) ou sur l'élément de fixation (602).

10. Procédé de montage d'un distributeur de lignes selon l'une quelconque des revendications précédentes, dans lequel le procédé comprend les étapes suivantes consistant à :
- enfiler (S1-S6b) des capuchons de maintien (107,108), des composants de connexion (306,307), un élément de fixation (602), un boîtier extérieur (106) et des joints d'étanchéité (502,503),
- dénuder (S7) les lignes individuelles (101,104) à connecter ;
- raccourcir (S7) les blindages (203) des lignes individuelles (101,104) ;
- enfiler (S8) les manchons de support coniques (204) sous les blindages des lignes individuelles ;
- connecter de manière électriquement conductrice (S9) les conducteurs (201,202) des lignes individuelles ;
- monter (S19) un insert électriquement isolant (301,303), de sorte qu'un ou plusieurs points de connexion soient électriquement isolés ;
- presser (S11) les composants de connexion sur les manchons de support coniques dans la direction axiale des manchons de support coniques ;
- enfiler (S12) un boîtier de blindage (501) pardessus les composants de connexion (306,307) et l'insert (301,303) ;
- positionner (S15) un boîtier extérieur (106) au-dessus du boîtier de blindage (501) ; et
- fixer (S16a,16b) le boîtier extérieur (106) avec les capuchons de maintien (107,108).

11. Procédé selon la revendication 10, **caractérisé en ce que** le procédé comprend en outre l'étape consistant à positionner un élément de fixation (602) après le positionnement (S15) du boîtier extérieur (106).

12. Faisceau de câbles comprenant une pluralité de lignes individuelles (101,104) et un répartiteur de lignes (100) selon l'une quelconque des revendications 1 à 9.
